(19) Europäisches Patentamt
European Patent Office
Office européen des brevets

(11) Numéro de publication : **0 030 759**
**B1**

(12) FASCICULE DE BREVET EUROPÉEN

(45) Date de publication du fascicule du brevet :
**18.01.84**

(51) Int. Cl.³ : **C 01 B 15/00, C 11 D 17/00**

(21) Numéro de dépôt : **80201146.0**

(22) Date de dépôt : **03.12.80**

(54) **Procédé pour la stabilisation de particules contenant des composés peroxygénés et compositions de blanchiment contenant des particules stabilisées selon ce procédé.**

(30) Priorité : **12.12.79 FR 7930664**

(43) Date de publication de la demande :
**24.06.81 Bulletin 81/25**

(45) Mention de la délivrance du brevet :
**18.01.84 Bulletin 84/03**

(84) Etats contractants désignés :
**AT BE CH DE FR GB IT LI NL SE**

(56) Documents cités :
**FR-A- 2 123 476**
**GB-A- 1 387 167**
**US-A- 4 131 562**

(73) Titulaire : **INTEROX Société anonyme dite:**
**Rue du Prince Albert, 33**
**B-1050 Bruxelles (BE)**

(72) Inventeur : **Brichard, Jean**
**Eikendallaan, 5**
**B-1800 Vilvoorde (BE)**

(74) Mandataire : **Meyers, Liliane et al**
**Solvay & Cie Département de la propriété industrielle**
**310, rue de Ransbeek**
**B-1120 Bruxelles (BE)**

Jouve, 18, rue St-Denis, 75001 Paris, France

# 0 030 759

Procédé pour la stabilisation de particules contenant des composés peroxygénés
et compositions de blanchiment contenant des particules stabilisées selon ce procédé

La présente invention concerne un procédé pour la stabilisation des particules contenant des composés peroxygénés par enrobage au moyen d'enrobants insolubles dans l'eau et fusibles à basse température tels que des cires ainsi que des compositions de blanchiment contenant des particules stabilisées selon ce procédé.

Il est bien connu d'employer certains composés peroxygénés se trouvant sous forme de particules comme agents de blanchiment dans les mélanges détergents en poudre. Dans les compositions détergentes domestiques usuelles, on emploie habituellement des particules de perborate de sodium tétrahydraté comme composé de blanchiment parce qu'elles sont relativement stables à la décomposition dans un milieu détergent pulvérulent. Cependant, il devient de plus en plus courant d'utiliser des techniques de lavage et de trempage à froid du linge pour lesquelles le perborate de sodium présente l'inconvénient de se dissoudre trop lentement. Pour remédier à cet inconvénient, il a été proposé d'introduire dans les poudres détergentes des particules d'autres composés peroxygénés minéraux, notamment de percarbonates, de perphosphates et de peroxymonosulfates de métaux alcalins, qui ont des vitesses de dissolution à basse température appropriées. Or, ces composés peroxygénés et, particulièrement les percarbonates, se décomposent trop rapidement à l'état pulvérulent surtout lorsqu'ils sont stockés en atmosphère humide. De plus, les autres constituants des compositions détergentes activent souvent cette décomposition.

De nombreux procédés ont été proposés pour pallier ces inconvénients et améliorer la stabilité des particules de composés peroxygénés tels que les percarbonates. Ainsi, dans le brevet US-A 3 847 830 déposé le 17 janvier 1972 qui correspond à la demande de brevet FR-A-2 123 476 (Laporte Industries Ltd), on a proposé de les enrober au moyen d'enrobants insolubles dans l'eau et fusibles à basse température à base d'acides gras, d'alkanolamides d'acides gras, d'esters de glycérol d'acides gras, d'alcools à longue chaîne ou de cires de paraffines. Les techniques utilisées pour effectuer l'enrobage sont complexes du fait de l'insolubilité dans l'eau de l'enrobant. Elles impliquent la mise en solution de l'enrobant dans un solvant organique, ou bien sa mise en œuvre sous forme fondue. La première technique implique l'élimination de grandes quantités de solvant, ce qui rend le procédé très complexe, tandis que, dans la seconde, les quantités d'enrobant nécessaires pour assurer une stabilité suffisante des particules de composés peroxygénés sont relativement importantes ce qui a pour effet de réduire la teneur en oxygène actif des particules stabilisées obtenues et de réduire exagérément la vitesse de dissolution dans l'eau du composé peroxygéné.

La présente invention a pour but de pallier les inconvénients de ce procédé connu. De plus, le procédé selon l'invention est particulièrement simple à réaliser et ne nécessite qu'une faible consommation d'énergie. Il n'implique la mise en œuvre d'aucun solvant et n'entraîne que peu de pertes de produits. Les particules stabilisées obtenues selon l'invention présentent une vitesse de dissolution dans l'eau tout à fait satisfaisante et une bonne résistance à l'attrition et au mottage. En outre, elles ont une teneur en oxygène actif proche de la teneur théorique du fait de leur teneur en enrobant relativement très faible.

La présente invention concerne à cet effet un procédé pour la stabilisation de particules contenant des composés peroxygénés par enrobage au moyen d'enrobants insolubles dans l'eau dont la température de début de fusion est supérieure à la température ambiante et inférieure à 90 °C selon lequel on maintient en lit fluidisé les particules contenant les composés peroxygénés à une température au moins égale à la température de début de fusion de l'enrobant et selon lequel on introduit l'enrobant dans le lit fluidisé sous forme de particules solides et on maintient le lit fluidisé.

De préférence, on choisit un enrobant dont la température de début de fusion est inférieure à la température de fusion et à la température de décomposition du composé peroxygéné. Les enrobants dont la température de début de fusion est supérieure à 30 °C conviennent bien en général. Le plus souvent, on choisit un enrobant ayant une température de début de fusion inférieure à 80 °C.

De bons résultats ont été obtenus lorsque l'enrobant a une température de début de fusion comprise entre 40 et 90 °C. Les meilleurs résultats ont été obtenus avec les enrobants dont la température de début de fusion est comprise entre 50 et 80 °C.

Les enrobants utilisables selon l'invention peuvent être de natures diverses et peuvent être constitués de mélanges de plusieurs composés. On choisit en général des composés organiques compatibles avec le composé peroxygéné. Ils se caractérisent par une solubilité dans l'eau inférieure à 5 % et, de préférence, inférieure à 1 % en poids. Ces enrobants sont en général choisis parmi les cires de tous types disponibles commercialement. Ils peuvent contenir éventuellement certains additifs tels que des produits capables d'abaisser leur point de fusion ou des produits capables d'améliorer encore la stabilité des particules du composé peroxygéné. Ces additifs sont en général présents à raison de moins de 10 % en poids de l'enrobant.

Les cires utilisables selon l'invention peuvent être d'origine végétale, animale, minérale ou synthétique. Elles peuvent être à base de divers types de produits tels que des hydrocarbures lourds, des acides gras et leurs dérivés tels que des esters et des amides, et des alcools gras. Les meilleurs résultats ont été obtenus avec des cires à base d'hydrocarbures lourds.

Les acides gras présents dans les cires utilisables selon l'invention sont en général des acides

2

naturels ou synthétiques contenant au moins 10 atomes de carbone. En général, on utilise des cires contenant des acides gras saturés contenant au moins 10 atomes de carbone ou des acides gras insaturés contenant au moins 18 atomes de carbone. De préférence, on met en œuvre des cires contenant des acides gras saturés contenant de 10 à 30 atomes de carbone, les meilleurs résultats étant obtenus en utilisant des cires d'acides gras saturés contenant de 14 à 25 atomes de carbone.

Les dérivés d'acides gras présents dans les cires utilisables selon l'invention peuvent être de natures très diverses. En général, ce sont des esters d'acides gras tels que définis ci-avant et de composés choisis parmi les alcools mono- ou poly-hydriques et les époxydes, et des amides d'acides gras tels que définis ci-avant et d'amines aromatiques, aliphatiques ou alicycliques substituées ou non.

Les esters d'acides gras présents dans les cires utilisables selon l'invention sont de préférence des esters d'alcools choisis parmi les alcools à longue chaîne tels que des alcools contenant de 10 à 30 atomes de carbone, des glycols, des polyéthylèneglycols, le glycérol, le pentaérythritol et des carbohydrates, ou encore des esters d'époxydes tels que l'oxyde d'éthylène et l'oxyde de propylène.

Les amides d'acides gras présents dans les cires utilisables selon l'invention sont de préférence des amides de mono- ou di-alkanolamines contenant de 1 à 20 atomes de carbone.

Les alcools gras présents dans les cires utilisables selon l'invention sont de préférence des alcools naturels ou synthétiques contenant au moins 12 atomes de carbone. En général, ce sont des alcools gras saturés mono- ou poly-hydriques primaires ou secondaires. De bons résultats ont été obtenus en utilisant des alcools gras saturés contenant de 12 à 35 et de préférence de 14 à 30 atomes de carbone.

Les hydrocarbures lourds présents dans les cires utilisables selon l'invention peuvent être naturels ou synthétiques. Ils peuvent être de natures très diverses. Ainsi, on peut utiliser des hydrocarbures aliphatiques branchés ou non, des hydrocarbures aromatiques et des homo- et co-polymères d'oléfines, éventuellement modifiés chimiquement. Comme hydrocarbures aliphatiques et comme polymères d'oléfines, on utilise de préférence des produits dont le poids moléculaire moyen varie de 300 à 800. Comme hydrocarbures aromatiques, on utilise de préférence des dérivés naphténiques. De bons résultats ont été obtenus avec des cires microcristallines, des cires de paraffine et des polyéthylènes à courte chaîne éventuellement modifiés chimiquement. On peut ainsi les oxyder et éventuellement les soumettre à des traitements ultérieurs tels que des saponifications, des estérifications ou encore des traitements aux cyanates.

Les particules d'enrobants utilisées selon l'invention peuvent avoir des dimensions comprises en général entre 0,05 et 10 mm de diamètre moyen et de préférence entre 0,1 et 5 mm.

La quantité d'enrobants mise en œuvre selon l'invention est en général comprise entre 0,01 et 10 % du poids de composé peroxygéné à stabiliser et de préférence entre 0,1 et 3 % de ce poids.

Les composés peroxygénés contenus dans les particules à stabiliser selon l'invention peuvent être de natures diverses.

En général, ce sont des composés peroxygénés normalement peu stables de nature organique ou inorganique. L'invention peut ainsi être appliquée aux particules de peroxydes organiques solides tels que les peroxyacides aliphatiques, cycloaliphatiques et aromatiques et les peroxydes d'acyle correspondants. Elle s'applique notamment à la stabilisation de particules de peroxyacides aromatiques et de peroxydes d'acyle correspondants tels que les peroxydes de dibenzoyle, de phtaloyle et de diphtaloyle, l'acide peroxyphtalique, les acides peroxybenzoïques substitués et les acides mono- ou poly-peroxytrimellitiques, -peroxytrimésiques, -peroxyhémimellitiques, -peroxypyromellitiques, -peroxyprehnitiques et -peroxymellophaniques.

L'invention peut être avantageusement appliquée à la stabilisation de particules de composés peroxygénés minéraux tels que les peroxydes de métaux alcalins et alcalino-terreux et les persels de métaux alcalins normalement instables. Parmi ceux-ci, les plus utilisés sont le peroxyde de calcium, le peroxyde de magnésium ainsi que les percarbonates, perpyrophosphates, pertripolyphosphates, persilicates et peroxymonosulfates de métaux alcalins et plus particulièrement de sodium et de potassium. Les particules à stabiliser peuvent contenir un seul composé peroxygéné ou un mélange de composés peroxygénés.

En particulier l'invention s'applique très avantageusement à la stabilisation de particules contenant du percarbonate de sodium.

Les particules de composés peroxygénés stabilisées selon l'invention peuvent contenir en plus des composés peroxygénés divers additifs en quantités très variables. Parmi ces additifs, on peut utiliser notamment des stabilisants tels que les silicates de métaux alcalins et alcalino-terreux, ou d'autres additifs dont la nature est choisie en fonction de l'usage auquel le composé peroxygéné est destiné. La teneur en additifs dépend notamment de leur nature, de l'usage auquel est destiné le composé peroxygéné, de la nature du composé peroxygéné et des durées de stockage prévues. En général, la quantité de composés peroxygénés présente dans les particules à stabiliser est d'au moins 20 % du poids des particules et de préférence d'au moins 50 %. L'incorporation de stabilisants directement dans les particules en même temps que les composés peroxygénés est cependant insuffisante pour assurer une stabilité satisfaisante des particules dans leurs conditions normales d'utilisation.

Les particules de composés peroxygénés auxquelles la présente invention est applicable peuvent être préparées de toute manière connue en elle-même. Ainsi lorsque les composés peroxygénés sont des persels, on peut les fabriquer par des procédés en lit fluidisé tels que ceux décrits dans les brevets

3

français 70.01315 déposé le 14 janvier 1970 et 71.40860 déposé le 15 novembre 1971 au nom de SOLVAY & Cie, ou encore par des procédés de cristallisation à partir de leurs solutions aqueuses.

Les particules de composés peroxygénés mises en œuvre peuvent être de dimensions très variables. En général, leur diamètre moyen est compris entre 0,01 et 2 mm et de préférence entre 0,02 et 1 mm.

La température du lit fluidisé est choisie en fonction de la température de début de fusion de l'enrobant mis en œuvre. De bons résultats ont été obtenus en utilisant une température de lit comprise entre environ cette température de début de fusion et cette même température plus 20 °C.

Le débit d'introduction de l'enrobant dans le lit fluidisé peut varier dans de larges limites. Lorsqu'on opère en discontinu, on peut introduire tout l'enrobant en une fois. En général, on préfère cependant introduire l'enrobant en continu ou par petites portions successives pour éviter le colmatage du lit. Lorsqu'on opère en continu, l'enrobant est introduit en continu ou par petites portions successives. Le débit d'enrobant est en général compris entre 0,01 et 50 grammes par minute et par litre de lit. De bons résultats ont été obtenus lorsque ce débit est compris entre 0,1 et 10 $g \cdot min^{-1} \cdot l^{-1}$ de lit. Le débit du composé peroxygéné est ajusté en conséquence lorsqu'on opère en continu pour obtenir la teneur en enrobant souhaitée.

Le procédé selon l'invention peut être réalisé en continu ou en discontinu. L'appareil à lit fluide mis en œuvre peut être de forme cylindrique, cyclindroconique, parallélépipédique ou de toute autre forme permettant l'application du procédé. L'appareil peut être équipé de divers dispositifs tels que des cloisons verticales permettant d'améliorer l'homogénéité du mélange entre l'enrobant et les particules de composé peroxygéné à enrober.

Le lit fluidisé peut être porté à la température désirée selon diverses techniques connues telles que le chauffage du gaz vecteur et/ou le chauffage d'un faisceau tubulaire placé dans le lit.

La température de l'air ou autre gaz vecteur introduit au bas du lit fluidisé, par exemple au travers d'une toile ou d'une plaque de répartition peut varier dans de grandes limites dépendant notamment de la température du lit que l'on désire maintenir, de la chaleur latente de fusion de l'enrobant, du débit du gaz vecteur, et de l'emploi éventuel d'autres moyens de chauffage du lit fluidisé.

Lorsque le lit fluide est chauffé au moyen du gaz vecteur, la température de ce dernier est choisie en général entre la température du lit que l'on désire maintenir et cette même température plus 50 °C. Lorsque l'enrobant a une température de début de fusion comprise entre 50 et 80 °C la température du gaz vecteur est en général comprise entre 55 et 120 °C.

Le gaz vecteur peut être tout gaz inerte vis-à-vis des constituants du lit fluide. Habituellement on utilise de l'azote, des gaz rares ou de l'air. L'air convient particulièrement bien. La vitesse du gaz vecteur peut être variable. Elle est en général comprise entre 0,05 et 5 et le plus souvent entre 0,1 et 3 $m \cdot sec^{-1}$. Les meilleurs résultats ont été obtenus avec des vitesses de gaz vecteur de 0,3 à 2 $m \cdot sec^{-1}$.

Les particules solides d'enrobant peuvent être introduites dans le lit de toute manière connue, par exemple au moyen d'un dispositif plongeant dans le lit. Cette introduction peut se faire par gravité à l'aide d'un gaz pulseur.

L'alimentation en particules de composés peroxygénés peut se faire également de toute manière connue, par exemple au moyen d'un système Venturi.

La sortie des particules de composés peroxygénés stabilisées peut se faire par tout dispositif connu, par exemple par élutriation par le fond de l'appareil à lit fluidisé ou par une tubulure latérale, cette tubulure déterminant alors la hauteur du lit fluidisé.

Les gaz issus du lit fluidisé sont avantageusement conduits au travers d'un séparateur de fines tel que par exemple un cyclone. Ils peuvent ensuite être envoyés à l'atmosphère ou éventuellement recyclés au lit fluidisé.

Les particules de composés peroxygénés stabilisées peuvent être ensuite refroidies selon diverses techniques connues. Lorsqu'on opère en discontinu, on peut ainsi, après la phase d'enrobage, maintenir les particules en lit fluidisé et abaisser la température du gaz de fluidisation de manière que la température du lit soit inférieure à la température de fusion de l'enrobant mise en œuvre. Lorsqu'on opère en continu, on envoie en général en continu les particules sortant du lit fluidisé dans un dispositif permettant de les refroidir tel qu'un second lit fluide maintenu à une température inférieure à la température de fusion de l'enrobant. Le refroidissement en lit fluidisé des particules stabilisées se fait en général à l'aide d'un gaz vecteur maintenu à la température ambiante ou à une température voisine. D'autres dispositifs de refroidissement connus peuvent également être utilisés.

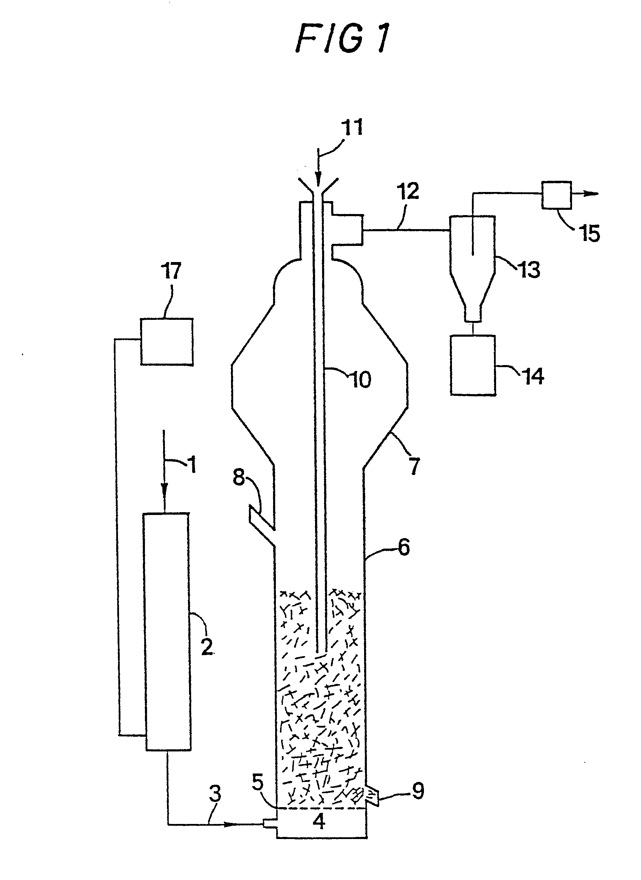

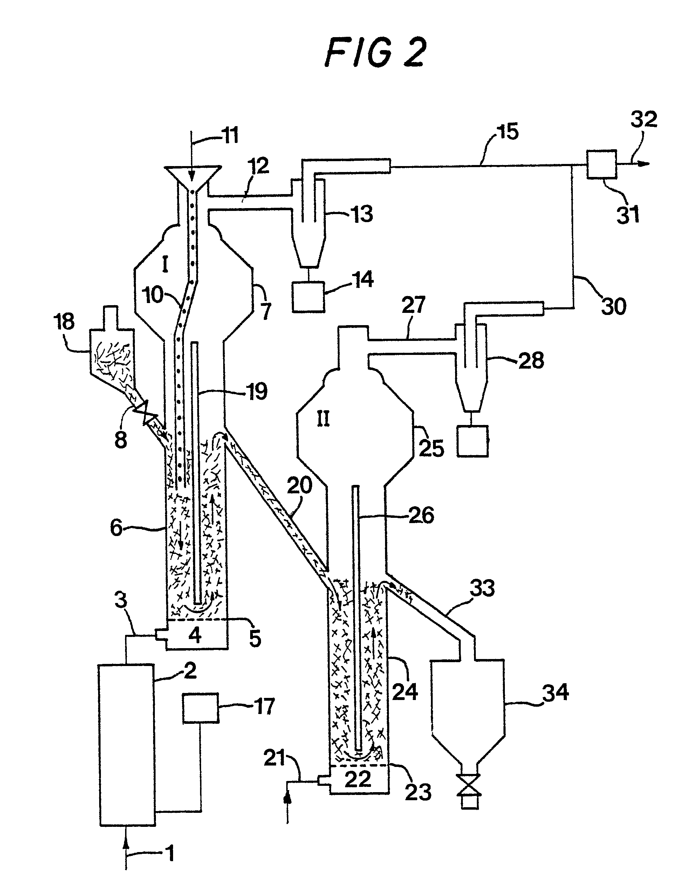

Le procédé selon l'invention peut avantageusement être réalisé dans des appareillages tels que ceux représentés aux figures 1 et 2 en annexe qui représentent des manières différentes de réaliser le procédé selon l'invention.

La figure 1 représente un appareil discontinu à lit fluidisé de particules 6 fluidisées au moyen d'un gaz vecteur tel que l'air qui entre dans le système par la voie 3 après avoir été préchauffé dans un préchauffeur 2 alimenté en air par la voie 1 et dont la température est contrôlée au moyen d'un régulateur 17. L'air chaud passe dans la boîte à vent 4, traverse la grille 5 et pénètre dans le lit fluidisé 6 surmonté d'une zone 7 permettant de renvoyer une partie des fines au lit fluidisé. Une tubulure 9 permet de vider l'appareil. La tubulure 8 permet de remplir l'appareil au moyen des particules à enrober.

Les particules d'enrobant sont introduites dans le lit par le tube plongeant vertical 10 à l'aide de l'entonnoir 11.

4

Les gaz issus du lit fluidisé passent par la voie 12 dans un collecteur de fines ou cyclone 13 et quittent l'appareil par le ventilateur 15. Les fines sont récupérées en 14.

La figure 2 représente un appareil à lit fluidisé capable de fonctionner en continu. L'appareil comporte deux lits fluidisés. Dans la section I, on procède à l'enrobage des particules et dans la section II on procède à leur refroidissement.

Les particules présentes dans le lit fluidisé d'enrobage 6 sont fluidisées au moyen d'un gaz vecteur tel que l'air qui entre dans le système par la voie 3 après avoir été préchauffé dans un préchauffeur 2 alimenté en air par la voie 1 dont la température est contrôlée au moyen d'un régulateur 17. L'air chaud passe dans la boîte à vent 4, traverse la grille 5 et pénètre dans le lit fluidisé 6 surmonté d'une zone 7 permettant de renvoyer une partie des fines au lit fluide. La tubulure 8 raccordée au réservoir de stockage 18 permet d'introduire les particules à enrober dans l'appareil.

Les particules d'enrobant sont introduites dans le lit par le tube plongeant 10 à l'aide de l'entonnoir 11. Une paroi médiane hermétique 19 est disposée dans le lit entre la zone d'introduction de l'enrobant et des particules à enrober et la zone de prélèvement des particules enrobées de manière à assurer un mélange homogène des particules de composés peroxygénés et de l'enrobant et ainsi un enrobage régulier et une utilisation complète de la cire. Cette paroi permet ainsi d'imposer un parcours obligé aux particules et de ne prélever que des particules enrobées.

Les gaz issus du lit fluidisé passent par la voie 12 dans un collecteur de fines ou cyclone 13 et quittent l'appareil par la voie 15 et rejoignent le ventilateur 31.

Les particules enrobées formées dans le lit fluidisé 6 sont prélevées en continu par la voie 20 et envoyées dans le second lit fluidisé de refroidissement 24.

Les particules enrobées sont fluidisées au moyen d'un gaz vecteur frais tel que l'air qui entre dans le système par la voie 21. L'air frais passe dans la boîte à vent 22, traverse la grille 23 et pénètre dans le lit fluidisé 24 surmonté d'une zone 25 permettant de renvoyer une partie des fines au lit fluidisé. Une tubulure 33 permet de collecter la production qui est envoyée au réservoir de stockage 34.

Le lit fluidisé 24 peut également être équipé d'une paroi médiane 26 de manière à imposer un parcours obligé aux particules et de ne prélever que des particules bien refroidies.

Les gaz issus du lit fluidisé passent par la voie 27 dans un collecteur de fines ou cyclone 28 et quittent l'appareil par la voie 30 et rejoignent le ventilateur 31.

Selon une variante non représentée à la figure 2, au moins une partie de l'air recueilli par la voie 32 peut être utilisée pour fluidiser les particules du lit 6 et être ainsi renvoyée en 1 ce qui permet de récupérer une partie des calories ayant servi au chauffage du lit fluidisé 6.

Les dimensions des particules de composés peroxygénés stabilisées selon l'invention peuvent varier dans d'assez larges limites. En général, les particules ont des dimensions voisines de celles des autres particules composant les poudres détergentes. Habituellement elles ont des dimensions moyennes comprises entre 0,01 et 2 mm et de préférence entre 0,02 et 1 mm.

Lorsque les particules stabilisées selon l'invention contiennent du percarbonate de sodium, elles ont en général un poids spécifique apparent par écoulement libre compris entre 0,8 et 1,5 kg/dm$^3$ et le plus souvent entre 0,8 et 1,3 kg/dm$^3$.

Leur coulabilité, exprimée par le temps d'écoulement d'un poids de 250 g par l'orifice de 16 mm de diamètre d'un entonnoir pour analyse à tige courte, ne dépasse en général pas 10 secondes et leur indice d'usure mesuré selon le procédé décrit dans la norme ISO/TC 47/WG 11 (Secrétariat — 86) 167 de la British Standard Institution est en général inférieur à 10 %.

Le poids spécifique apparent par écoulement libre, dont il est question ci-dessus, est déterminé par un procédé analogue à ceux décrits aux ASTM Standards D 392-38 et B 212-48, préconisés respectivement pour la mesure du poids spécifique apparent des poudres à mouler et des poudres métalliques. L'appareillage utilisé est cependant légèrement différent. Il comporte une trémie tronconique dont la grande base a un diamètre de 53 mm et la petite base, munie d'un obturateur à ouverture totale, a un diamètre de 21 mm, la hauteur entre les bases étant de 58 mm et le volume utile d'environ 60 cm$^3$.

Le godet cylindrique d'un volume de 50 cm$^3$ a un diamètre intérieur de 37 mm et une hauteur égale à environ 46 mm. La base de la trémie est placée à 65 mm au-dessus du fond du godet. Le mode opératoire est identique à celui décrit aux standards ASTM. On ferme l'obturateur de la trémie et on remplit celle-ci avec le produit à examiner et on arase au niveau du bord supérieur de la trémie à l'aide d'une lame rectiligne. On dispose le godet dans l'axe de la trémie et on ouvre l'obturateur. Après écoulement de la matière, on arase au niveau supérieur du godet. Le poids spécifique apparent par écoulement libre est égal au rapport entre le poids de matière dans le godet exprimé en kg et le volume du godet exprimé en dm$^3$.

La coulabilité du produit est caractérisée par le temps d'écoulement d'une quantité déterminée de produit par l'orifice de la tige d'un entonnoir calibré. Le procédé est sensiblement analogue à celui décrit au standard ASTM D 392-38.

L'appareil est constitué d'un entonnoir à clapet en acier inoxydable poli dont l'angle du cône est de 60°, le diamètre intérieur de 180 mm et la longueur de la tige de 165 mm. Le diamètre intérieur de la tige est de 16 mm. Le test consiste à introduire 250 g de ce produit dans l'entonnoir et à mesurer le temps d'écoulement après ouverture du clapet.

La présente invention concerne également des compositions de blanchiment contenant des particules de composés peroxygénés stabilisées par le procédé décrit ci-avant.

De telles compositions contiennent en outre, en général, outre le ou les composés peroxygénés, un ou plusieurs agents tensioactifs choisis parmi les agents tensioactifs cationiques, anioniques, non ioniques ou amphotères tels que par exemple ceux cités dans le livre « Surface Active Agents » de A. M. Schwarz et J. W. Perry ou dans « Encyclopedia of Surface Active Agents » Vol. I, 1961 et Vol. II, 1964 de I. P. Sisley et P. I. Wood ou encore dans le brevet Etats-Unis 3 159 581 et un ou plusieurs auxiliaires de détergence appelés « builders » dont une des fonctions principales consiste à séquestrer les ions métalliques responsables de la dureté de l'eau, tels que des polyphosphates, des polymères carboxylés, le nitrilotriacétate de sodium, des sels de l'acide éthylènediamine-tétraacétique et des dérivés des acides phosphoniques.

Ces compositions peuvent également contenir d'autres substances choisies en fonction du domaine spécial d'application de la composition. Parmi celles-ci on peut citer les activateurs des persels, les azurants optiques, les inhibiteurs de mousse, les enzymes, les inhibiteurs de ternissement et agents d'antiredéposition des salissures, les désinfectants, les inhibiteurs de corrosion, les parfums, les colorants, les régulateurs de pH, les agents capables de libérer du chlore actif, etc.

Les compositions de blanchiment contiennent en général :

— de 0,1 à 90 % en poids de particules de composés peroxygénés enrobées selon l'invention
— de 0 à 50 % en poids d'agents tensioactifs
— de 0 à 50 % en poids d'un ou plusieurs builders
— de 0 à 20 % d'additifs divers.

Les procédés de lavage, nettoyage, trempage ou blanchiment mettant en œuvre de telles compositions sont en général réalisés à des températures de 10 à 130 °C et lesdites compositions y sont mises en œuvre à raison de 0,5 à 20 g/l de bain aqueux.

Afin d'illustrer l'invention, sans pour autant en limiter la portée, on donne ci-après des exemples de fabrication de particules de percarbonate de sodium enrobées et des exemples mettant en évidence les propriétés de ces particules. Les exemples 1 à 6 ont été réalisés selon l'invention et les exemples 7 à 9 ont été réalisés selon une autre technique à titre de comparaison.

Exemples 1 à 6

Les essais décrits ci-après ont été réalisés en discontinu dans un appareil du même type que celui représenté à la figure 1.

L'appareil consiste en un cylindre de 15 cm de diamètre et 77 cm de hauteur, muni à sa base d'une plaque de répartition du gaz (trous de 1 mm).

Initialement on introduit dans cet appareil des particules homogènes de percarbonate de sodium de poids spécifique apparent par écoulement libre de 1,15 à 1,18 kg · dm$^{-3}$.

Le lit de particules est fluidisé par introduction au travers de la plaque de répartition des gaz d'un courant d'air chauffé. On introduit par un tube plongeant au sein du lit des particules de cire. Après enrobage on refroidit le lit en le maintenant sous forme fluidisée à l'aide d'air froid à la température ambiante.

La hauteur du lit fluidisé est d'environ 40 cm.

Les conditions opératoires sont reprises au Tableau 1 ci-après. Deux types de cires ont été essayées : la cire A qui est le produit VYBAR 103 vendu par BARECO et qui est un polymère hydrocarboné dérivé de l'éthylène, et la cire B qui est le produit VYBAR 253 également vendu par BARECO.

(Voir Tableau 1, page 7)

Tableau 1

Conditions d'enrobage selon l'invention

| ESSAI N° | | 1 | 2 | 3 | 4 | 5 | 6 |
|---|---|---|---|---|---|---|---|
| **Percarbonate de sodium mis en oeuvre** | | | | | | | |
| charge | kg | 3 | 3 | 3 | 3 | 3 | 3 |
| teneur en oxygène actif | % poids | 14,1 | 14,1 | 14,3 | 14,3 | 14,3 | 14,3 |
| diamètre moyen | mm | 0,32 | 0,32 | 0,40 | 0,40 | 0,40 | 0,40 |
| **Cire mise en oeuvre** | | | | | | | |
| type | | A | A | B | B | A | A |
| point de début de fusion | °C | 72 | 72 | 68 | 68 | 72 | 72 |
| quantité totale introduite | g | 15 | 60 | 30 | 15 | 30 | 15 |
| débit | $g.min^{-1}$ | * | * | $3^{**}$ | $3^{**}$ | $3^{**}$ | $3^{**}$ |
| diamètre moyen | mm | 3,2 | 3,2 | 3,2 | 3,2 | 3,2 | 3,2 |
| **Conditions d'enrobage air de fluidisation** | | | | | | | |
| température | °C | 88 | 90 | 95 | 95 | 108 | 110 |
| débit | $Nm^3.h^{-1}$ | 29 | 29 | 42 | 42 | 43 | 43 |
| température du lit | °C | 78 | 80 | 78 | 79 | 79 | 81 |
| temps de contact | min | 20 | 20 | 15 | 10 | 15 | 10 |
| **Conditions de refroidissement air de fluidisation** | | | | | | | |
| température | °C | 20-25 | 20-25 | 20-25 | 20-25 | 20-25 | 20-25 |
| débit | $Nm^3.h^{-1}$ | 29 | 30 | 30 | 30 | 30 | 30 |
| température finale du lit | °C | 40 | 40-45 | 40-45 | 40-45 | 40-45 | 40-45 |
| temps de contact | min | 15 | 15-20 | 15-20 | 15-20 | 20-25 | 20-25 |
| **Percarbonate de sodium enrobé** | | | | | | | |
| teneur en oxygène actif | % poids | 13,9 | 13,7 | 14,0 | 14,1 | 14,1 | 14,1 |
| teneur en enrobant | % poids | 0,5 | 2 | 1 | 0,5 | 1 | 0,5 |

\* la cire a été introduite en une fois
\*\* la cire est introduite à raison de 0,75 g toutes les 15 sec.

Exemples 7 à 9

Les essais repris ci-dessous ont été réalisés en discontinu dans un appareil semblable à celui utilisé pour la réalisation des essais 1 à 6. Cette fois l'appareil ne comporte pas de tube plongeant dans le lit mais par contre il est pourvu dans le bas du lit d'un gicleur permettant l'introduction en continu d'une émulsion de cire.

Initialement on introduit dans l'appareil des particules homogènes de percarbonate de sodium de poids spécifique apparent par écoulement libre de 1,15 à 1,18 kg · dm$^{-3}$.

Le lit de particules est fluidisé par introduction au travers de la plaque de répartition des gaz d'un courant d'air chauffé. On introduit par un atomiseur une émulsion aqueuse de cire. Après enrobage on refroidit le lit en le maintenant sous forme fluidisée à l'aide d'air froid à la température ambiante.

La hauteur du lit fluidisé est d'environ 40 cm.

Les conditions opératoires sont reprises au Tableau 2 ci-après. Trois types de cires ont été essayés : la cire C qui est le produit PETROLITE C 7500 vendu par BARECO et qui est un polymère de l'éthylène à faible poids moléculaire, la cire D qui est le produit PETROLITE C 1035 vendu par BARECO et qui est une

7

fraction pétrolière constituée d'hydrocarbures n-paraffiniques, paraffiniques branchés et naphténique, et la cire KPE produite par HOECHST qui est un produit d'estérification par des alcools d'une cire acide obtenue par oxydation des bitumes dérivés de la lignite.

Tableau 2

Conditions d'enrobage des essais de comparaison

| ESSAI N° | | 7 | 8 | 9 |
|---|---|---|---|---|
| **Percarbonate de sodium mis en oeuvre** | | | | |
| charge | kg | 3 | 3 | 3 |
| teneur en oxygène actif | % poids | 14,4 | 14,4 | 14,4 |
| diamètre moyen | mm | 0,38 | 0,38 | 0,38 |
| **Cire mise en oeuvre** | | | | |
| type | | C | D | E |
| point de début de fusion | °C | 97,8 | 90 | 76 |
| quantité totale introduite | g | 60 | 60 | 60 |
| débit de l'émulsion | kg.h$^{-1}$ | 0,291 | 0,300 | 0,300 |
| concentration de l'émulsion | % poids | 20 | 20 | 20 |
| **Alimentation du gicleur essais** | | | | |
| débit | Nm$^3$.h$^{-1}$ | 2 | 2 | 2 |
| température | °C | 20 | 20 | 20 |
| pression absolue | Bar | 2 | 2 | 2 |
| **Conditions d'enrobage air de fluidisation** | | | | |
| température | °C | 100 | 100 | 90 |
| débit | Nm$^3$.h$^{-1}$ | 42 | 42 | 39 |
| température du lit | °C | 63 | 64 | 53 |
| temps de contact | min | 62 | 60 | 60 |
| **Conditions de refroidissement air de fluidisation** | | | | |
| température | °C | 20-25 | 20-25 | 20-25 |
| débit | Nm$^3$.h$^{-1}$ | 42 | 42 | 39 |
| température finale du lit | °C | 40 | 40 | 40 |
| temps de contact | min | 20 | 20 | 20 |
| **Percarbonate de sodium enrobé** | | | | |
| teneur en oxygène actif | %. poids | 14,1 | 14,1 | 14,1 |
| teneur en enrobant | % poids | 2 | 2 | 2 |

Examen des produits

Les différentes particules obtenues aux exemples 1 à 6 appelées respectivement produit 1 à produit 6 ont été comparées aux produits obtenus aux exemples 7 à 9 appelés respectivement produits 7 à 9. Les résultats sont rassemblés au Tableau 3 ci-après.

# 0 030 759

Tableau 3

| Produits | Oxygène actif, % poids | PSE, kg.dm$^{-3}$ | Coulabilité, sec | Vitesse de dissolution à 15°C, % dissous | |
|---|---|---|---|---|---|
| | | | | 3 min | 15 min |
| Perborate de sodium tétrahydraté | 10,4 | 0,9 | 4 | 70 | 100 |
| Percarbonate de sodium non enrobé | 14,3 | 1,15 | 3 | 95 | 100 |
| Percarbonate de sodium enrobé de l'exemple. | | | | | |
| 1 | 13,9 | 1,15 | | 76 | 100 |
| 2 | 13,7 | 1,15 | | 87 | 100 |
| 3 | 14,0 | 1,16 | 3,5 | 86 | 100 |
| 4 | 14,1 | 1,14 | | 69 | 100 |
| 5 | 14,1 | 1,17 | 3 | 94 | 100 |
| 6 | 14,1 | 1,15 | | 69 | 100 |
| 7 | 14,1 | 1,14 | 3 | 23 | 75 |
| 8 | 14,1 | 1,14 | 3 | 65 | 100 |
| 9 | 14,1 | 1,15 | 4 | 68 | 100 |

## Stabilité des produits

Ces essais ont pour but de mettre en évidence la stabilité des produits selon l'invention lors du stockage en présence des autres constituants d'une poudre à lessiver sans enzyme et de la comparer à celle du percarbonate de sodium non enrobé et du perborate de sodium tétrahydraté commercial ainsi qu'à du percarbonate de sodium enrobé selon d'autres techniques tel que les produits de comparaison 7 à 9.

On utilise des mélanges contenant 2 % en poids d'oxygène actif soit 7 g de percarbonate de sodium (produits 1 à 9 et percarbonate de sodium non enrobé), soit 10 g de perborate de sodium tétrahydraté, et 42 g de poudre commerciale dont la composition est donnée au Tableau 4 ci-après.

(Voir Tableau 4, page 10)

9

## 0 030 759

Tableau 4

Composition de la poudre détergente sans enzyme

| Constituants | g/100 g |
|---|---|
| Silicate de sodium | 7,5 |
| Silicate de magnésium | 1,9 |
| Tripolyphosphate de sodium | 43,7 |
| Sulfate de sodium | 21,0 |
| Ethylènediaminetétraacétate de sodium | 0,3 |
| Carboxyméthylcellulose | 1,2 |
| Matières organiques tensioactives | 14,4 |
| − alkylarylsulfonate de sodium | |
| − condensat d'oxyde d'éthylène sur alcool gras | |
| − savon | |
| Eau et divers | 10,0 |

Après homogénéisation, on introduit les mélanges dans des boîtes en carton (11,5 × 7 × 2 cm) recouvertes de cire microcristalline (perméabilité 10 g $H_2O/m^2 \cdot$ jour) ; les boîtes ainsi préparées sont alors stockées à 35 °C en atmosphère de 80 % d'humidité relative (HR) pendant 4 semaines.

Une autre série de boîtes recouvertes au recto et au verso d'un film d'acétate de cellulose (perméabilité 550 g $H_2O/m^2 \cdot$ jour) sont également préparées et stockées à 28 °C en atmosphère de 70 % d'humidité relative (HR) pendant 4 semaines.

Après chaque durée de stockage, on dose l'oxygène actif de la poudre par titrage direct au $KMnO_4(N/2)$ et on évalue la perte en oxygène actif par rapport à l'oxygène actif initial.

Les résultats des tests de conservation en présence de la poudre détergente sont donnés respectivement au Tableau 5 ci-après. Ils montrent la supériorité remarquable de l'invention par rapport aux particules de percarbonate de sodium non enrobées et par rapport aux particules de percarbonate de sodium enrobées selon une autre technique.

Tableau 5

Résultats des tests de conservation en boîtes en présence de la poudre détergente sans enzyme

| Particules | 28°C 70 % HR | 35°C 80 % HR |
|---|---|---|
| | % d'oxygène actif perdu après 4 semaines | |
| Percarbonate de sodium non enrobé | 11 | 26 |
| Percarbonate de sodium enrobé de l'exemple | | |
| 1 | 6 | 21 |
| 2 | 3 | 11 |
| 3 | 4 | 8 |
| 4 | 5 | 11 |
| 5 | 5 | 11 |
| 6 | 7 | 13 |
| 7 | 9 | 14 |
| 8 | 10 | 13 |
| 9 | 12 | 24 |

10

**0 030 759**

### Revendications

1. Procédé pour la stabilisation de particules contenant des composés peroxygénés par enrobage au moyen d'enrobants insolubles dans l'eau dont la température de début de fusion est supérieure à la température ambiante et inférieure à 90 °C selon lequel on maintient en lit fluidisé les particules contenant les composés peroxygénés à une température au moins égale à la température de début de fusion de l'enrobant caractérisé en ce que l'on introduit l'enrobant dans le lit fluidisé sous forme de particules solides.

2. Procédé selon la revendication 1 caractérisé en ce qu'on met en œuvre un enrobant ayant une température de début de fusion comprise entre 40 et 90 °C.

3. Procédé selon la revendication 1 ou 2 caractérisé en ce qu'on choisit l'enrobant parmi les hydrocarbures lourds, les acides gras et leurs dérivés, les alcools gras et leurs mélanges. ·

4. Procédé selon la revendication 3 caractérisé en ce qu'on choisit l'enrobant parmi les hydrocarbures lourds.

5. Procédé selon l'une quelconque des revendications 1 à 4 caractérisé en ce que l'enrobant est mis en œuvre sous forme de particules de diamètre moyen compris entre 0,1 et 5 mm.

6. Procédé selon l'une quelconque des revendications 1 à 5 caractérisé en ce que l'enrobant est mis en œuvre à raison de 0,1 à 3 % du poids des particules de composé peroxygéné.

7. Procédé selon l'une quelconque des revendications 1 à 6 caractérisé en ce que le lit fluidisé est maintenu à une température comprise entre la température de début de fusion de l'enrobant et cette même température plus 20 °C.

8. Procédé selon l'une quelconque des revendications 1 à 7 caractérisé en ce qu'il est appliqué à la stabilisation de particules contenant du percarbonate de sodium.

9. Compositions de blanchiment caractérisées en ce qu'elles contiennent des particules contenant des composés peroxygénés stabilisées selon l'une quelconque des revendications 1 à 8.

### Claims

1. Process for the stabilisation of particles containing peroxygenated compounds by coating the particles with water-insoluble coating agents, the initial melting point of which is above ambient temperature and below 90 °C, wherein the particles containing the peroxygenated compounds are kept in a fluidised bed at a temperature equal to at least the initial melting point of the coating agent, characterised in that the coating agent is introduced into the fluidised bed in the form of solid particles.

2. Process according to Claim 1, characterised in that the coating agent used has an initial melting point of between 40 and 90 °C.

3. Process according to Claim 1 or 2, characterised in that the coating agent is chosen from amongst heavy hydrocarbons, fatty acids and their derivatives, fatty alcohols and mixtures thereof.

4. Process according to Claim 3, characterised in that the coating agent is chosen from amongst heavy hydrocarbons.

5. Process according to any one of Claims 1 to 4, characterised in that the coating agent is used in the form of particles having an average diameter of between 0.1 and 5 mm.

6. Process according to any one of Claims 1 to 5, characterised in that the coating agent is used in a proportion of 0.1 to 3 % of the weight of the particles of peroxygenated compound.

7. Process according to any one of Claims 1 to 6, characterised in that the fluidised bed is kept at a temperature between the initial melting point of the coating agent and 20 °C higher than this temperature.

8. Process according to any one of Claims 1 to 7, characterised in that it is applied to the stabilisation of particles containing sodium percarbonate.

9. Bleaching compositions, characterised in that they contain particles containing peroxygenated compounds stabilised according to any one of Claims 1 to 8.

### Ansprüche

1. Verfahren zur Stabilisierung peroxidierte Verbindungen enthaltender Teilchen durch Umhüllung mittels in Wasser unlöslicher Umhüllungsmittel deren beginnende Schmelztemperatur oberhalb der Umgebungstemperatur und unterhalb von 90 °C liegt, wobei man die die peroxidierten Verbindungen enthaltenden Teilchen in einem Fließbett bei einer Temperatur von zumindest gleich der Temperatur des Schmelzbeginns des Umhüllungsmittels hält, dadurch gekennzeichnet, daß man das Umhüllungsmittel in das Fließbett in Form fester Teilchen einbringt.

2. Verfahren gemäß Anspruch 1, dadurch gekennzeichnet, daß man ein Umhüllungsmittel einsetzt, welches eine Temperatur des beginnenden Schmelzens zwischen 40 und 90 °C besitzt.

3. Verfahren gemäß Anspruch 1 oder 2 dadurch gekennzeichnet, daß man das Umhüllungsmittel auswählt unter den schweren Kohlenwasserstoffen, den Fettsäuren und ihren Derivaten, den Fettalkoholen und deren Mischungen.

4. Verfahren gemäß Anspruch 3, dadurch gekennzeichnet, daß man das Umhüllungsmittel auswählt unter den schweren Kohlenwasserstoffen.

5. Verfahren gemäß einem der Ansprüche 1 bis 4, dadurch gekennzeichnet, daß das Umhüllungsmittel eingesetzt wird in Form von Teilchen mit einem mittleren Durchmesser zwischen 0,1 und 5 mm.

6. Verfahren gemäß einem der Ansprüche 1 bis 5, dadurch gekennzeichnet, daß das Umhüllungsmittel eingesetzt wird in einer Menge von 0,1 bis 3 Gew.-% bezogen auf die Teilchen der peroxidierten Verbindung.

7. Verfahren gemäß einem der Ansprüche 1 bis 6, dadurch gekennzeichnet, daß das Fließbett bei einer Temperatur gehalten wird, die zwischen der Temperatur des Schmelzbeginns des Umhüllungsmittels und einer um 20 °C höheren Temperatur liegt.

8. Verfahren gemäß einem der Ansprüche 1 bis 7, dadurch gekennzeichnet, daß es angewandt wird auf die Stabilisierung von Teilchen enthaltend Natriumpercarbonat.

9. Bleichmittelzusammensetzungen, dadurch gekennzeichnet, daß sie peroxidierte Verbindungen enthaltende Teilchen enthält stabilisiert nach einem der Ansprüche 1 bis 8.

# FIG 1

# FIG 2